# EUROPEAN PATENT SPECIFICATION

(11) **EP 1 917 865 B1**
(45) Date of publication and mention of the grant of the patent: **28.03.2012**
(21) Application number: 06022065.4
(22) Date of filing: 20.10.2006
(51) Int. Cl.: A23G 9/38, A23G 9/40

(54) **Ice-structuring peptides of lactic origin**
Eisstrukturierende Peptiden aus Milch
Peptides d'origine laitière structurant la glace

(43) Date of publication of application: 07.05.2008
(73) Proprietor: Nestec S.A., 1800 Vevey (CH)
(72) Inventor: Wille, Hans-Juergen Erich, 60000 St Martin le Noeud (FR); Vieira, Josélio, Batista, York YO31 8LG (GB); de Kruif, Cornelius, Gijsbertus, 3931 KK Woudenberg (NL); Floris, Theodorus, Arnoldus, Gerardus, 6835 AT Arnhem (NL); Slangen, Karel, Joseph, 6715 DW Ede (NL)
(74) Representative: Rupp, Christian

(56) References cited:
- EP-A2- 1 166 653
- WO-A-00/53029
- WO-A-93/08702
- WO-A-94/10854
- WO-A-99/37164
- WO-A-02/069734
- WO-A-2006/042632
- FR-A- 2 100 161
- JP-A- 11 276 086
- US-A1- 2 547 136
- US-A1- 3 889 001
- US-A1- 5 405 756
- US-A1- 2006 233 933
- RAVULA R R ET AL: "EFFECT OF ACID CASEIN HYDROLYSATE AND CYSTEINE ON THE VIABILITY OF OF YOGURT AND PROBIOTIC BACTERIA IN FERMENTED FROZEN DIARY DESSERTS" AUSTRALIAN JOURNAL OF DAIRY TECHNOLOGY, DAIRY INDUSTRY ASSOCIATION OF AUSTRALIA, MELBOURNE, AU, vol. 53, no. 3, October 1998 (1998-10), pages 175-179, XP000784444 ISSN: 0004-9433

## Description

### Field of the invention

The present invention relates to the use of peptides of lactic origin as ice-structuring agents and to their use in the manufacture of frozen products.

### Background of the invention

Ice-structuring proteins (ISPs) or abusively named anti-freeze proteins (AFPs) naturally occur in a range of species that are susceptible to freeze damage, i.e. to species that are found in sub-zero environments. They have evolved in nature to help many different organisms e.g. fish, insects, plants and bacteria, to survive in these cold environments. To date, fish from cold climates has been considered as the main source of ISPs (cf. for example WO 9702343 (Unilever), EP 0788745 (Nestlé)). Plant sources of ISPs are also described in for instance EP 0959689 (Unilever), EP 0918863 B1 (Unilever), EP 1049713 (Unilever), EP 1049783 B1 (Unilever), EP 1276763 (Unilever). Further, EP 1240188 (Unilever) discloses ISPs isolated from bacterial sources from low-temperature environments. WO 9804147 (Unilever) reports the isolation of peptides that inhibit ice-crystal growth, derived from plants such as rye or grass.

It is thought that ISPs achieve their function by binding to specific planes of the ice crystals and by minimising recrystallisation (Biophysical Journal, Feb. 1991, 409-418). Inhibition of ice recrystallisation, also referred to as ice crystal growth suppression (Cryobiology, 25, 55-60, 1988) is a property of ISPs that can be tested by comparing at a certain point in time the ice crystals in the presence of ISP and in the absence of ISP. The application of this method in the testing of fish ISPs is described in US 5118792 (DNA Plant technology Corporation). Thus, it has been reported that ISPs from Antarctic fish are very effective in minimizing ice crystal growth (Cryobiology 32:23-34, 1995). Compared to fish ISPs, an ISP found recently in rye grass *(Lolium perenne)* is reported to be even 200 times more effective (in molar terms) in inhibiting recrystallisation (Nature, 406(6793):256, 2000).

Another property of ISPs is their ability to influence the shape of ice crystals. This property stems from selective binding of ISPs to certain faces of the ice crystals and therewith limiting crystal growth in certain directions. The presence of ice crystals having a hexagonal bipyramid shape is then considered indicative of the presence of ISP. This method is described for testing the activity of extracellular winter rye ISPs in WO 92/22581 (University of Waterloo).

ISPs also have the ability to inhibit the activity of ice nucleating substances. This interaction between an ISP and ice nucleator may for example result in increasing thermal hysteresis (WO 96/40973 - University of Notre Dame du Lac). Thermal hysteresis is characterised by a lowering of the apparent freezing temperature of a solution without affecting the melting temperature. Thus, the identification of sources of ISPs by thermal hysteresis tests is widely described in the literature (e.g. John G. Duman, Cryobiology, 30, 322-328, 1993).

It has been suggested that it is the tertiary structure of these proteins which allows them to interact with ice (cf.

Fletcher et al., Annu. Rev. Physiol., 2001, 63:359-390). Thus, all these properties render ISPs applicable to a range of potential uses. Most importantly, ISPs have been suggested for improving the freezing tolerance of products. Frozen products can be subjected to temperature fluctuations leading to an increase in ice crystal size and thus to textural defects. ISPs thus enable frozen products to withstand temperature fluctuations that may occur during packaging, storing, manufacturing etc., thus allowing them to keep a desirable texture.

The use of ISPs in the field of frozen foods has been widely reported in WO2006042632 (Unilever), EP 1541034 (Unilever), EP 1158866 (Unilever), US 6914043 (Unilever), EP 0966206 (Unilever), WO 9841107 (Unilever), WO 9841109 (Unilever), EP 1049383 (Unilever); EP 1158865 (Unilever), EP 1158863 (Unilever), EP 1158862 (Unilever), EP 1158864 (Unilever), WO 98/04146 (Unilever), EP 1417892 (Unilever), WO 03055320 (Unilever), US 20040048962 (Unilever).

US 3,889,001 relates to oil-in-water emulsion products which can be frozen and which comprise small amounts of protein hydrolysates. These protein hydrolysates are said to impart good freeze-thaw stability to such an emulsion.

US 2006/0233933 relates to aerated emulsions such as ice creams which are fortified with calcium. In order to optimize the bio-availability of the calcium, casein hydrolysates such as casein phosphopeptides are used in the product.

FR 2,100,161 relates to the use of partially hydrolysed albumin in acidic frozen confections. It was found therein that a combination of low pH and presence of partially hydrolysed protein has a positive effect on the consistency of the frozen product.

EP 1 166 653 concerns iron-containing protein compositions which comprise sugar and which can be frozen. The protein may be hydrolysed casein and the frozen solution is said to have good freeze-thawing stability.

WO 94/10854 pertains to ice confections containing cleaved proteins which are said to act as emulsifier and stabilizer.

The article by Ravula R. R. *et al.* in the Australian Journal of Dairy Technology, 1998, 53, 3, mentions the use of acid casein hydrolysates to improve viability of probiotics in frozen desserts.

JP 11-276086 concerns low-allergen frozen desserts which are made by introducing one or more kinds of protein hydrolysates.

WO 00/53029 relates to anti-freeze proteins from sources such as animals or plants which can be used in ice cream.

US 5,405,756 relates to the preparation of casein phosphopeptides which are acid soluble. The phosphopeptides are produced by cleavage of casein with an enzyme.

WO 93/08702 also relates to a method for producing casein hydrolysates.

However, sources of ISPs have been limited to sources from sub-zero environments and/or to the use of genetically modified organisms (GMOs) for producing these proteins. For instance, WO 9403617 (Unilever) discloses the production of ISPs from yeast and their possible use in ice cream. WO 9611586 (HSC R&D Ltd - Seabright Corporation Ltd) describes fish ISPs produced by microbes. Others ISPs have mainly been obtained by enzymatic and chemical modification. For example, WO 9013571 (DNA Plant technology Corporation) discloses ISP peptides produced chemically or by recombinant DNA techniques from plants.

These techniques are subject to much controversy and the resulting "GMO labelled" products are not always appealing to the consumer.

### Object of the invention

It is thus an object of the invention to provide an alternative source of ice-structuring agent which can be used in frozen products and which avoids the need to use genetically manipulated additives.

### Summary of the invention

Accordingly, this object is solved by the features of the independent claims. The dependent claims further develop the central idea of the invention.

Frozen food products comprising at least one ice-structuring peptide derived from milk protein are described herein.

In a first aspect, the invention relates to the use of a peptide derived from milk protein as ice-structuring agent.

A process for improving the heat shock resistance of frozen confectionery product comprising the steps of:
a. Cleaving a milk protein into peptides
b. Isolating the peptides obtained in the previous step and
c. Using said peptides in the manufacture of a frozen confectionery product
also forms part of the invention.

Ice-structuring peptides are thus obtainable by enzymatic cleavage of casein.

### Figures

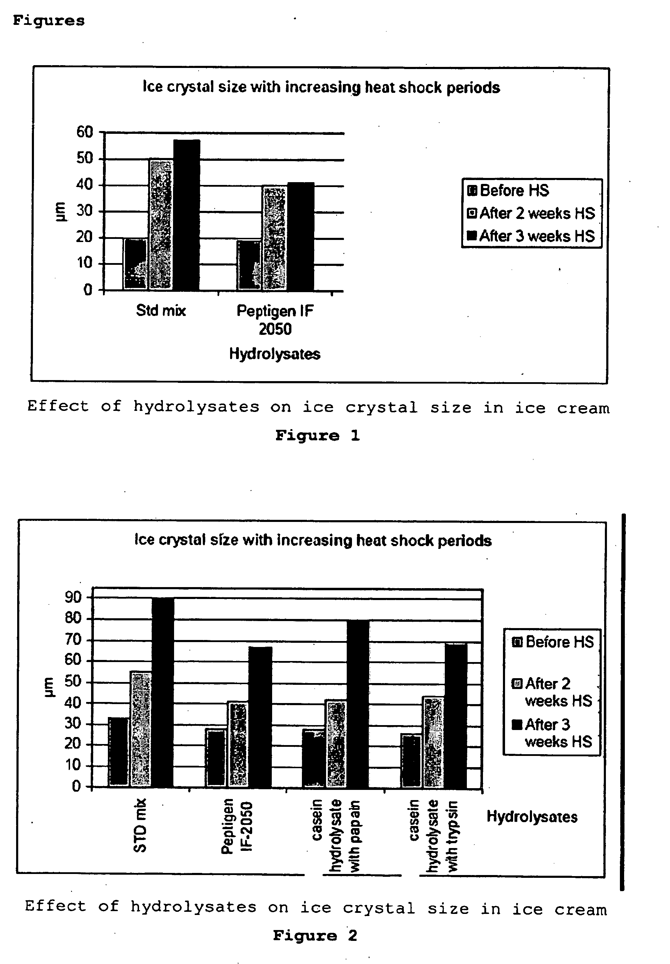

The present invention is described hereinafter with reference to some of its embodiments (or reference embodiment) shown in the figures, wherein
- Fig. 1 shows the evolution of ice crystal size with increasing heat shock periods (before heat shock, after 2 weeks heat shock and after 3 weeks heat shock) for a standard ice cream mix and for an ice cream comprising Peptigen IF-2050, a commercial casein hydrolysate (Arla Food Ingredient - Denmark).
- Fig. 2 shows the evolution of ice crystal size with increasing heat shock periods (before heat shock, after 2 weeks heat shock and after 3 weeks heat shock) for a standard ice cream mix, for an ice cream comprising Peptigen IF-2050, for an ice cream comprising peptides obtained from hydrolysis of casein with papain and for an ice cream comprising peptides obtained from hydrolysis of casein with trypsin.

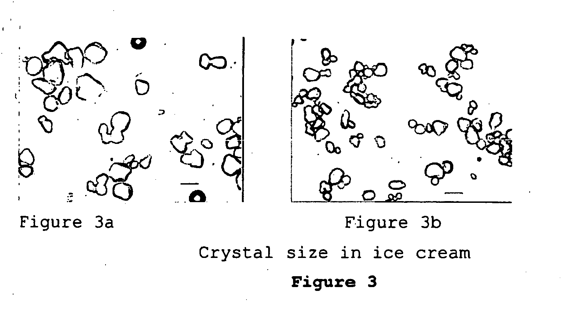

- Fig. 3a and 3b are pictures of ice crystals after 3 weeks heat shock in ice cream for a standard mix (fig. 3a) and for an ice cream comprising Peptigen IF-2050 (fig. 3b), wherein the scale bar represents 100 microns.

### Detailed description of the invention

Frozen food products which comprise at least one ice-structuring peptide are described. By "peptide" is meant a chain of up to 50 amino acids linked by peptide bonds. The peptides used in the invention are not proteins and do not comprise a tertiary structure. They are protein hydrolysates. The weight of said peptide is less than 1 kDa. By "ice-structuring" is meant that the peptide is able to interact at the ice crystal interface, in particular to inhibit ice crystal growth. This function is in contrast to and distinguishable from the aerating/air cell stabilising function of some peptides which occurs at the air cell interfaces.

The peptides used in the present invention are derived from milk protein. Milk proteins include casein and whey protein. Preferably, the milk protein used is casein. By "casein" is meant casein as it is found naturally, i.e. casein which has not been modified chemically. According to the invention, this definition includes casein as such and water-soluble caseinates, for example alkali metal, alkaline earth metal and ammonium caseinates.

The peptide may be derived by enzymatic or chemical cleavage of said milk protein. In a preferred embodiment, the milk protein is treated with an enzyme, which may be selected from any protease enzyme capable of hydrolysing the milk protein into peptides. More preferably, the enzyme is selected from trypsin, papain, neutrase or mixtures thereof. According to the invention, upon treatment of milk protein with an enzyme, the protein is cleaved into peptides which may be used as ice-structuring agents. These are capable of controlling frozen food stability by inhibiting crystal growth, thus improving the quality of the product.

Alternatively, it has been found that commercially available milk protein hydrolysates may be used in the present invention. It is thus thought that said commercial hydrolysates may comprise peptides according to the invention, i.e. peptides which may be used as ice-structuring agents. Such hydrolysates are for example sold under the name of Peptigen, Peptone, Peptopro etc.

Crystal growth can be measured by crystal size analysis using a computer-controlled image analyser. The size of crystals is usually measured by the diameter distribution over the volume (i.e. over the amount of ice crystals evaluated). Thus a Dv(0.50) represents the value of the maximum diameter of 50% of the total volume of ice crystals evaluated. Dv(0.90) represents the value of the maximum diameter of 90% of the total volume of ice crystals evaluated. By using the peptides in the invention, the crystal size of a sugar solution at -11°C containing said peptides is reduced by 15%-25% compared to a reference sugar solution at -11°C with no peptides (cf. Table 2).

The effect of the peptides is further evidenced by heat shock treatment. By "heat shock" is meant the inevitable temperature cycling during storage and distribution that creates ice crystals growth and other deterioration due to structural change. This "heat shock" is reproduced by a process, which is a defined cycle of thermal changes inflicted on the product. The product is placed inside a cabinet set at -20°C, which is automatically switched on for 19 hours and then switched off for 5 hours using a 24-hour timer in order to provoke a thermal shock.

These analyses led to the surprising conclusion that certain casein-derived peptides have a visible and measurable action on the inhibition of ice-crystal growth.

Indeed, referring to figs. 1, 2 and 3a and 3b, it can be seen that although the crystal size in ice cream grows, in particular after 2 weeks of heat shock, by using the ice-structuring peptides according to the invention a smaller crystal size is obtained.

The manufacturing conditions of some of said peptides which provide anti-freeze activity are given in table 1.

Thus, frozen food products may comprise the peptide used in the invention in an amount between 0.0001-10%, preferably in an amount between 0.001-5%, more preferably in an amount between 0.01-1% by weight of the composition.

The frozen food product may be any food product. Preferably, it is a food confectionery product which may be ice cream, water ice, sorbet, frozen yogurt, mellorine etc. The product may comprise inclusions in the form of chocolate pieces, nuts, pieces of fruits etc. The product may also comprise a coating, such as e.g. a chocolate coating or a fruit coating etc. The coating itself may also contain inclusions. The frozen food product may be aerated or non-aerated. Aerated frozen confections preferably have an overrun of from 30% to 200%, more preferably from 50% to 150%. For example, the level of overrun in ice cream is typically from about 70% to 100%, and in confectionery such as mousses the overrun can be as high as 200 to 250 wt%, whereas the overrun in milk ices is from 25 to 35%.

Thus, the invention encompasses the use of a peptide derived from milk protein as ice-structuring agent. The milk protein is preferably casein and the peptide may be derived from the milk protein by chemical or enzymatic cleavage of the protein.

According to another embodiment of the invention, the peptide may be obtained through fractionation of the substrate obtained by chemical or enzymatic cleavage of the protein. This provides the advantage of enriching the active principle and thus to work at lower concentrations.

According to the invention, the ice-structuring peptide is preferably used in frozen confectionery products.

Referring to fig. 3b, it can be seen that by using the peptides according to the invention, the ice crystals are smaller compared to a standard ice cream mix (fig. 3a).

Furthermore, it has been observed that the shape of ice crystals in ice cream maintains an essentially round aspect. This effect is surprising in view of the fact that regular anti-freeze proteins used in the art tend to modify the structure of ice crystals. Indeed, ice crystals found in frozen products containing ISPs tend to have an elongated, rectangular shape which affects the texture of the product by increasing its hardness. By the present invention, a frozen product having a smooth, soft texture may be obtained while still being resistant to temperature fluctuations.

In a further aspect, the invention thus provides a method for improving the heat shock resistance of frozen confectionery products.

The first step in the method consists in the cleavage of the milk protein. Preferably the milk protein is casein. Cleavage may be carried out chemically or enzymatically. A preferred process is enzymatic hydrolysis of the milk protein in order to yield peptides. For the hydrolysis of milk protein, the enzyme/substrate ratio is from 1/100 to 1/500, and preferably 1/250 w/w.

The peptides obtained may vary widely depending on the conditions used e.g. incubation temperature, incubation time, the pH of the solution etc. According to the invention, it has been found that an incubation temperature between 45°C-70°C, an incubation time between 5 and 480 minutes and a pH of the solution between 6.5 and 8.5 are preferred conditions in order to obtain different peptides which are all efficient ice-structuring compounds.

The enzyme used may be selected from any protease enzyme. Preferably, it is selected from trypsin, papain, neutrase or mixtures thereof.

Thus, the milk protein is incubated with the desired enzyme under determined conditions. After the desired period of time, the enzyme is then inactivated and the substrate is collected. Peptides are then isolated from the substrate and may be used directly in the production of a frozen product. Alternatively, the substrate may further be subjected to fractionation, after which the peptides are isolated and used as ice-structuring agents in the manufacture of a frozen product. The peptides may also be further purified prior to use. The frozen product may be manufactured by any method known to the skilled person. Further, the peptides may be added at any stage during manufacture of the frozen product, more preferably during mix preparation, before maturation time.

Ice-structuring peptides are thus obtainable by enzymatic cleavage of casein. The enzyme cleavage may be carried out by any embodiment of a process described above.

In summary, the present invention provides a way to produce frozen products, and in particular frozen confectionery products which are smooth and stable after heat shock. It also provides for natural frozen products which have a "clean" label and are free of GMO additives. Furthermore, the modification of the ice crystal structure observed when using known ISPs is no longer observed. This yields a product which retains essentially circular ice crystals and maintains a smooth, palatable texture after heat shock.

The present invention is further illustrated by the following non-limiting examples.

### Examples

### Example 1: Manufacture of peptides

Commercial sodium caseinates were subjected to the action of different enzymes and the resulting hydrolysates were tested for their inhibitory activity on ice-crystal growth.

The hydrolysis is carried out according to the following procedure. The sodium caseinate protein isolate is dissolved at a concentration of 5% of proteins in water. The pH is adjusted to the desired pH according to table 1 by adding either sodium hydroxide, 1N NaOH, or hydrochloric acid, 1N HCl. The substrate is then brought to the desired temperature. Finally, the enzyme is added. During reaction, the pH is not adjusted.

For the hydrolysis of the caseinate, the enzyme/substrate ratio is from 1/100 to 1/500, and preferably 1/250 weight for weight.

Depending on the reaction conditions, the reaction time can go from 5 min up to 1200 min.

### Example 2: Sample preparation for analysis

50 µl of the reaction product (obtained by the method described in example 1) are mixed with RP-HPLC buffer for chromatographic analyses. Simultaneously, 1.5 ml of the reaction product are heated at 90°C for 15 minutes with the aim of inactivating the enzymes. After heating, the sample is centrifuged for 15 minutes at 14 000 revolutions/min (rpm), in order to eliminate any possible precipitates. The supernatant is lyophilized for the analysis of ice-crystal recrystallization.

### Example 3: HPLC analysis

The reverse-phase HPLC analysis is carried out on the samples obtained in example 2 according to the method described in S. Visser, C.J. Stangen and H.S. Rollema (1991) "Phenotyping of bovine milk proteins by reversed-phase high-performance liquid chromatography", J.Chromatography, 548, pp. 361-370. The separation is based mainly on the differences in hydrophobicity of the proteins and of the peptides. The detection is carried out by UV absorption at 22 nm.

### Example 4: Ice recrystallisation test

To evaluate the effect of the lactic protein hydrolysates on ice-crystal recrystallization, an analysis of ice-crystal recrystallization is carried out.

### Materials:

- Cryomicroscope consisting of:
   (1) Provis AX 70 Olympus microscope
   (2) Linkam BCS 196 cold stage
   (3) Linkam Nitrogen Pump LNP 93/2 fitted with 2L Dewar
   (4) Linkam Temperature Controller TP93
   (5) 3CCD Colour Video Camera (DXC-950P Sony)
- 14mm Round Cover Glass No 1 Deckglaser
- 10µL Microsyringe # 701 Hamilton
- Quartz Coverslips Holder Linkam THMS/Q
- Analytical Balance AT400 Mettler Toledo
- 250ml Erlenmeyer
- 20ml glass vials
- Liquid Nitrogen Air Liquide
- Distilled water
- D(+)-Saccharose #16104 Sigma-Aldrich

The lyophilized hydrolysate obtained according to the procedure described above is dissolved in a 40% solution of sucrose in water. The final solution contains 5% by weight of lyophilized hydrolysate. A 40% solution of sucrose in water is used as a reference sample. A solution of peptides that inhibit ice-crystal growth (ISP type 1) in a 40% solution of sucrose in water is used as a positive control. The samples are analysed by observation under a microscope of Polyvar type sold by Reichert-Jung, Harnalser Hauptstrasse 219, Vienna, Austria, equipped with a Linkham temperature regulator sold by Linkham Scientific Intruments Ltd, Tadworth UK. The temperature regulator is pre-calibrated with n-dodecane (melting point: -9.6°C) and n-decane (melting point: -29.7°C).

A 2 µl sample is placed on a quartz cell covered with a circular cap. The quartz cell is placed on the temperature regulator and then cooled to -100°C at a rate of 90°C per minute. At -100°C, the sample is left to equilibrate for 2 minutes, and then reheated to -11°C at a rate of 30°C per minute. The time zero of the analysis is taken at the instant the sample reaches -11°C. During the first two minutes of the analysis, the microscope is regulated in order to ensure a good image and sufficient crystals for a significant analysis. After 2 minutes, the images from the microscope are acquired and stored using a video recorder software with a pre-defined time lapse (2 minutes). The images are recorded for each hydrolysate for 2h at constant temperature. Results are shown in table 2.

For each sample taken, the 40% sucrose solution is taken as a reference. For this solution, the ice crystals reach the average maximum size that can be reached for a given cooling/heating cycle since no ice-crystal growth inhibitor is present. The results obtained for the various hydrolysates can thus be compared with the microscope images of the ice crystals in the reference sucrose sample. By comparing the microscope images of the state of the crystals after one hour at -11°C with the image obtained for the reference sucrose solution, it is possible to establish whether or not an ice-crystal growth inhibition effect is observed for each hydrolysate tested.

Micrographs show the evolution of ice crystal during a typical experiment using the conditions described herein.

**Table 1 - Hydrolysates with ice-structuring activity**

| Protein | Enzyme | Incubation time | pH | Temperature °C |
|---|---|---|---|---|
| Casein | Papain | 480 min | 7 | 70 |
| Casein | Trypsin | 480 min | 8 | 45 |
| Casein | Neutrase | 5 min | 7 | 45 |
| Casein | Papain | 5 min | 7 | 70 |
| Casein | Trypsin | 5 min | 8 | 45 |

All these hydrolysates were the subject of a crystal size analysis using a computer-controlled image analyser. The results are reported in table 2.

**Table 2 - Crystal size analysis**

| | Crystal size (µm) after 1h at -11°C | | Crystal size (µm) after 2h at -11°C | |
|---|---|---|---|---|
| | Dv(0.50) | Dv(0.90) | Dv(0.50) | Dv(0.90) |
| 40% sucrose solution (reference) | 16.0 | 24.5 | 18.7 | 30 |
| Hydrol. Caseinate with Papain 480 min | 12.6 | 18.0 | 16.7 | 26.6 |
| Hydrol. Caseinate with Trypsin 480 min | 13.3 | 19.0 | 16.8 | 25 |
| Hydrol. Caseinate with Neutrase 5 min | 13.0 | 19.1 | 15.4 | 22 |
| Hydrol. Caseinate with Papain 5 min | 12.7 | 18.6 | 16.5 | 22.5 |
| Hydrol. Caseinate with Trypsin 5 min | 12.3 | 17.5 | 15 | 22.1 |

| | | | | |
|---|---|---|---|---|
| Dv (0.50) represents the value of the maximum diameter of 50% of the total volume of ice crystals evaluated; Dv (0.90) represents the value of the maximum diameter of 90% of the total volume of ice crystals evaluated. | | | | |

The results of this analysis confirm that the size of the ice crystals obtained is smaller in the five solutions containing the casein hydrolysates selected than in the 40% sucrose reference solution without agent for inhibiting ice-crystal growth. This shows the inhibitory effect on ice-crystal growth of these five hydrolysates.

### Example 3: Ice cream recipes used for trials

The following recipes were used in the trials at 1, 5 and 10% in ice cream. The standard mixes with an equivalent total solids (TS) content were used as reference.

| Ingredients | Std mix for 1% | 1% P | Std mix for 5% | 5% P | Std mix for 10% | 10% P |
|---|---|---|---|---|---|---|
| Water | 61.5 | 61.5 | 61.5 | 61.5 | 61.5 | 61.5 |
| Skimmed milk powder | 2 | 2 | 2 | 2 | 2 | 2 |
| Sweet whey powder | 8 | 8 | 8 | 8 | 6.5 | 6.5 |
| Sugar | 13 | 13 | 13 | 13 | 11 | 11 |
| Glucose syrup DE40 | 1 | 1 | 1 | 1 | 1 | 1 |
| Coconut fat | 9 | 9 | 9 | 9 | 7.5 | 7.5 |
| Emulsifier | 0.3 | 0.3 | 0.3 | 0.3 | 0.3 | 0.3 |
| Guar gum | 0.2 | 0.2 | 0.2 | 0.2 | 0.2 | 0.2 |
| Glucose syrup DE 20-23 | 5 | 4 | 5 | | 10 | |
| Peptides | | 1 | | 5 | | 10 |

| | | | | | | |
|---|---|---|---|---|---|---|
| Std: standard P: peptides used in the invention TS : 38% | | | | | | |

The freezing was performed after 24 hours aging on a KF 80 (Hoyer) using the following parameters:

| | |
|---|---|
| Dasher speed | 860 rpm |
| Flow rate | 701/h |
| Barrel relative pressure | 3 bar |
| Freezing temperature | -5.7°C |
| Overrun | 100% |

Technical tasting carried out after 3 weeks of heat shock found that the standard mix was very crystallised in the mouth. The perception of ice crystals after heat shock was lower in ice cream samples containing the peptides used in the invention.

## Claims

1. Use of a peptide derived from milk protein as ice-structuring agent.

2. Use according to claim 1, wherein the milk protein is casein.

3. Use according to any of claims 1 or 2, wherein the peptide is derived by chemical or enzymatic cleavage of the milk protein.

4. Use according to the preceding claim, wherein the peptide is obtained through fractionation of the chemical or enzymatic cleavage substrate.

5. Use according to any of claims 1 to 4 in frozen confectionery products.

6. Use according to claim 5, wherein the peptide is present in an amount of 0.0001-10%, preferably 0.001-5%, more preferably 0.01-1% by weight of the frozen product.

7. Use according to claims 5 or 6, wherein the frozen confectionery product is selected from ice cream, water ice, sorbet, frozen yogurt, mellorine.

8. Use according to any of claims 5 to 7, wherein the frozen confectionery product comprises inclusions and/or coatings.

9. Use according to any of claims 5 to 8, wherein the frozen confectionery product is aerated.

10. Process for improving the heat shock resistance of frozen confectionery product comprising the steps of:
a. Cleaving a milk protein into peptides
b. Isolating the peptides obtained in the previous step
c. Using said peptides in the manufacture of a frozen confectionery product.

11. Process of claim 10, wherein a fractionation step is carried out on the milk protein cleavage substrate obtained in step a.

12. Process according to any of claim 10 or 11, wherein the milk protein is casein.

13. Process according to any of claims 10 to 12, wherein the cleavage of milk protein is enzymatic or chemical.

14. Process according to claim 13, wherein the enzymatic cleavage is carried out with trypsin, papain, neutrase or mixtures thereof.

15. Process according to any of claims 13 or 14, wherein the enzymatic cleavage is carried out for a period of 5 to 480 min.

16. Process according to claims 13 to 15, wherein the enzymatic cleavage is carried out at a temperature between 45°C and 70°C.

17. Process according to claims 13 to 16, wherein the enzymatic cleavage is carried out at a pH between 6.5 and 8.5.

## Patentansprüche

1. Verwendung eines von Milchprotein abgeleiteten Peptids als Eisstrukturierendes Mittel.

2. Verwendung nach Anspruch 1, wobei das Milchprotein Casein ist.

3. Verwendung nach einem der Ansprüche 1 oder 2, wobei das Peptid der chemischen oder enzymatischen Spaltung des Milchproteins entstammt.

4. Verwendung nach einem der vorhergehenden Ansprüche, wobei das Peptid durch Fraktionierung des Substrats der chemischen oder enzymatischen Spaltung erhalten wird.

5. Verwendung nach einem der Ansprüche 1 bis 4 in gefrorenen Süßwarenprodukten.

6. Verwendung nach Anspruch 5, wobei das Peptid in einer Menge von 0,0001 - 10 Gew.-%, vorzugsweise 0,001 - 5 Gew.-%, bevorzugter 0,01 - 1 Gew.-% des gefrorenen Produkts vorliegt.

7. Verwendung nach den Ansprüchen 5 oder 6, wobei das gefrorene Süßwarenprodukt aus Eiscreme, Wassereis, Sorbet, gefrorenem Joghurt und Mellorine ausgewählt ist.

8. Verwendung nach einem der Ansprüche 5 bis 7, wobei das gefrorene Süßwarenprodukt Einschlüsse und/oder Beschichtungen enthält.

9. Verwendung nach einem der Ansprüche 5 bis 8, wobei das gefrorene Süßwarenprodukt belüftet ist.

10. Verfahren zur Verbesserung der Hitzeschockbeständigkeit von gefrorenem Süßwarenprodukt, bei dem:
a. Ein Milchprotein in Peptide aufgespalten wird
b. Die im vorangegangenen Schritt erhaltenen Peptide isoliert werden
c. Diese Peptide bei der Herstellung eines Süßwarenprodukts verwendet werden.

11. Verfahren nach Anspruch 10, wobei an dem in Schritt a. erhaltenen Substrat der Milchproteinspaltung ein Fraktionierungsschritt durchgeführt wird.

12. Verfahren nach einem der Ansprüche 10 oder 11, wobei das Milchprotein Casein ist.

13. Verfahren nach einem der Ansprüche 10 bis 12, wobei die Spaltung von Milchprotein enzymatisch oder chemisch erfolgt.

14. Verfahren nach Anspruch 13, wobei die enzymatische Spaltung mit Trypsin, Papain, Neutrase oder Mischungen davon durchgeführt wird.

15. Verfahren nach einem der Ansprüche 13 oder 14, wobei die enzymatische Spaltung für eine Dauer von 65 bis 480 Minuten durchgeführt wird.

16. Verfahren nach den Ansprüchen 13 bis 15, wobei die enzymatische Spaltung bei einer Temperatur zwischen 45°C und 70°C durchgeführt wird.

17. Verfahren nach den Ansprüchen 13 bis 16, wobei die enzymatische Spaltung bei einem pH zwischen 6,5 und 8,5 durchgeführt wird.

## Revendications

1. Utilisation d'un peptide dérivé de protéine de lait en tant qu'agent de structuration de glace.

2. Utilisation selon la revendication 1, dans laquelle la protéine de lait est la caséine.

3. Utilisation selon l'une quelconque des revendications 1 ou 2, dans laquelle le peptide est dérivé par clivage chimique ou enzymatique de la protéine de lait.

4. Utilisation selon la revendication précédente, dans laquelle le peptide est obtenu par fractionnement du substrat de clivage chimique ou enzymatique.

5. Utilisation selon l'une quelconque des revendications 1 à 4 dans des produits de confiserie congelés.

6. Utilisation selon la revendication 5, dans laquelle le peptide est présent dans une quantité de 0,0001-10%, de préférence 0,001-5%, encore plus préférablement 0,01-1% en poids du produit congelé.

7. Utilisation selon les revendications 5 ou 6, dans laquelle le produit de confiserie congelé est choisi parmi crème glacée, glace à l'eau, sorbet, yaourt congelé, mellorine.

8. Utilisation selon l'une quelconque des revendications 5 à 7, dans laquelle le produit de confiserie congelé comprend des inclusions et/ou des enrobages.

9. Utilisation selon l'une quelconque des revendications 5 à 8, dans laquelle le produit de confiserie congelé est aéré.

10. Procédé pour améliorer la résistance à un choc thermique d'un produit de confiserie congelé comprenant les étapes de :
a. clivage d'une protéine de lait en peptides,
b. isolation des peptides obtenus dans l'étape précédente,
c. utilisation desdits peptides dans la fabrication d'un produit de confiserie congelé.

11. Procédé selon la revendication 10, dans lequel une étape de fractionnement est réalisée sur le substrat de clivage de protéine de lait obtenu à l'étape a.

12. Procédé selon l'une quelconque des revendications 10 ou 11, dans lequel la protéine de lait est la caséine.

13. Procédé selon l'une quelconque des revendications 10 à 12, dans lequel le clivage de protéine de lait est enzymatique ou chimique.

14. Procédé selon la revendication 13, dans lequel le clivage enzymatique est réalisé avec la trypsine, la papaïne, la neutrase ou des mélanges de ceux-ci.

15. Procédé selon l'une quelconque des revendications 13 ou 14, dans lequel le clivage enzymatique est effectué pendant une durée de 5 à 480 min.

16. Procédé selon l'une quelconque des revendications 13 à 15, dans lequel le clivage enzymatique est effectué à une température comprise entre 45 °C et 70 °C.

17. Procédé selon l'une quelconque des revendications 13 à 16, dans lequel le clivage enzymatique est effectué à un pH compris entre 6,5 et 8,5.
